Europäisches Patentamt

European Patent Office

Office européen des brevets

(11) Veröffentlichungsnummer: **0 294 367 B1**

# EUROPÄISCHE PATENTSCHRIFT

(45) Veröffentlichungstag der Patentschrift:
27.02.91 Patentblatt 91/09

(51) Int. Cl.⁵: **G01J 1/42**

(21) Anmeldenummer: 86905212.6

(22) Anmeldetag: 06.09.86

(86) Internationale Anmeldenummer:
PCT/DE86/00358

(87) Internationale Veröffentlichungsnummer:
WO 87/01447 12.03.87 Gazette 87/06

(54) **EINRICHTUNG ZUM ERFASSEN DER RADIALEN INTENSITÄTSVERTEILUNG EINER LASERSTRAHLUNG.**

(30) Priorität: 09.09.85 DE 3532047

(43) Veröffentlichungstag der Anmeldung:
14.12.88 Patentblatt 88/50

(45) Bekanntmachung des Hinweises auf die Patenterteilung:
27.02.91 Patentblatt 91/09

(84) Benannte Vertragsstaaten:
AT BE CH DE FR GB IT LI LU NL SE

(56) Entgegenhaltungen:
EP-A- 0 067 363
DE-A- 3 127 086
US-A- 3 617 755
US-A- 4 009 392
US-A- 4 035 088

(73) Patentinhaber:
FRAUNHOFER-GESELLSCHAFT ZUR
FÖRDERUNG DER ANGEWANDTEN
FORSCHUNG E.V.
Leonrodstrasse 54
D-8000 München 19 (DE)

(72) Erfinder: BEYER, Eckhard
Starkenburgring 23
D-6146 Alsbach (DE)
Erfinder: KRAMER, Reinhard
Gernsheimerstrasse 103
D-6102 Pfungstadt (DE)
Erfinder: LOOSEN, Peter
Dorfstrasse 25a
D-5100 Aachen-Hahn (DE)

## Beschreibung

### Technisches Gebiet

Die Erfindung betrifft eine Einrichtung zum Erfassen der radialen Intensitätsverteilung einer Laserstrahlung unter selektivem Ausblenden eines Teilstrahls aus dem Gesamtstrahl.

Bei der Bearbeitung von Werkstücken mittels Laserstrahl wird das Ergebnis unter anderem durch die radiale Intensitätsverteilung der Laserstrahlung maßgeblich bestimmt. Die Kenntnis dieser Intensitätsverteilung ist daher von Wichtigkeit. Hierbei reicht jedoch die Untersuchung der Strahlqualität des unfokussierten Laserstrahl's zur Beurteilung des Bearbeitungsergebnisses nicht aus; vielmehr sind die Strahlverteilung und der Strahlquerschnitt im Fokus sowie die Fokuslage, bezogen auf die Werkstückoberfläche, für den Bearbeitungsprozeß von Bedeutung.

### Stand der Technik

Es ist bekannt, durch den Strahlquerschnitt einen Draht rotieren zu lassen, an dessen hochreflektierender Oberfläche die Laserstrahlung aufgeweitet und auf einen in geeigneter Lage zur Strahlachse positionierten Detektor abgelenkt wird [Optics and Laser Technologie 6, S. 149-153, 1982]. Mit einer solchen Anordnung kann jedoch die Strahlverteilung im Fokus und in dem zwischen Fokussierlinse und ihrer doppelten Brennweite liegenden Bereich vor und hinter dem Fokus eines Laserstrahls wegen der dann auftretenden Verzerrungsfehler nur unzureichend ermittelt werden. Außerdem werden zur Erfassung des gesamten zweidimensionalen Intensitätsprofils mehrere Detektoren benötigt, wobei eine Justierung der Anordnung auf das Strahlzentrum erforderlich ist, da sich anderenfalls ein falsches Bild ergäbe, das zu einer fehlerhaften Beurteilung der Strahleigenschaften führen würde.

### Darstellung der Erfindung

Der Erfindung liegt die Aufgabe zugrunde, eine Einrichtung zu schaffen, mit der die Intensitätsverteilung sowohl in einem unfokussierten als auch in einem fokussierten Laserstrahl unter Zuhilfenahme möglichst weniger Detektoren ermittelt werden kann, wobei die Anordnung justierunempfindlich sein soll und auch bei Laserleistungen von mehr als 10 kW einsetzbar sein soll.

Diese Aufgabe wird bei einer gattungsgemäßen Einrichtung durch die kennzeichnenden Merkmale des Anspruchs 1 gelöst.

Mit der erfindungsgemäßen Einrichtung wird bei einer Umdrehung des Trägers ein Schnitt durch den Laserstrahl aufgenommen. Zur Detektion des gesamten Strahlprofils mit Hilfe einer Vielzahl von an verschiedenen Orten vorgenommenen Schnitten durch den Laserstrahl kann gemäß einer weiteren Ausgestaltung der Erfindung die Drehachse des Trägers mittels eines Schrittmotors parallel verschoben werden.

Die mit der Erfindung erzielten Vorteile bestehen insbesondere darin,

– daß mit der erfindungsgemäßen Einrichtung die Intensitätsverteilung und der Strahlquerschnitt sowohl in einem unfokussierten Laserstrahl als auch im Fokus und in dem zwischen Fokussierlinse und ihrer doppelten Brennweite liegenden Bereich vor und hinter dem Fokus eines gebündelten Laserstrahls ermittelt werden kann,

– daß lediglich ein Detektor benötigt wird,

– daß ein Zentrieren auf das Strahlzentrum nicht erforderlich ist, aber Abweichungen der Strahllage erfaßt werden und

daß auch Laserstrahlen hoher Intensität untersucht werden können.

### Kurze Beschreibung der Zeichnungen

Ausführungsbeispiele der Erfindung sind in der Zeichnung dargestellt und werden im folgenden näher beschrieben.

Es zeigen

Fig. 1 eine erfindungsgemäße Einrichtung im Längsschnitt,

Fig. 2 einen vergrößerten Ausschnitt der Fig 1,

Fig. 3 einen Träger mit einem geraden, an den Enden mit je einem Stopfen verschlossenen Röhrchen als Wellenleiter,

Fig. 4 einen Träger mit einem an beiden Enden umgebogenen Lichtleiter als Wellenleiter,

Fig. 5 einen Träger mit einem geraden, an den Enden unter 45° angeschliffenen Lichtleiter,

Fig. 6 einen Träger mit einem geraden Lichtleiter mit Schutzkappen, deren Böden auf der Innenseite um 45° abgeschrägt sind,

Fig. 7 einen Träger mit mehreren Wellenleitern in der Seitenansicht,

Fig. 8 einen aus zwei Scheiben gebildeten Träger im Längsschnitt und

Fig. 9 desgleichen in der Seitenansicht.

### Wege zur Ausführung der Erfindung

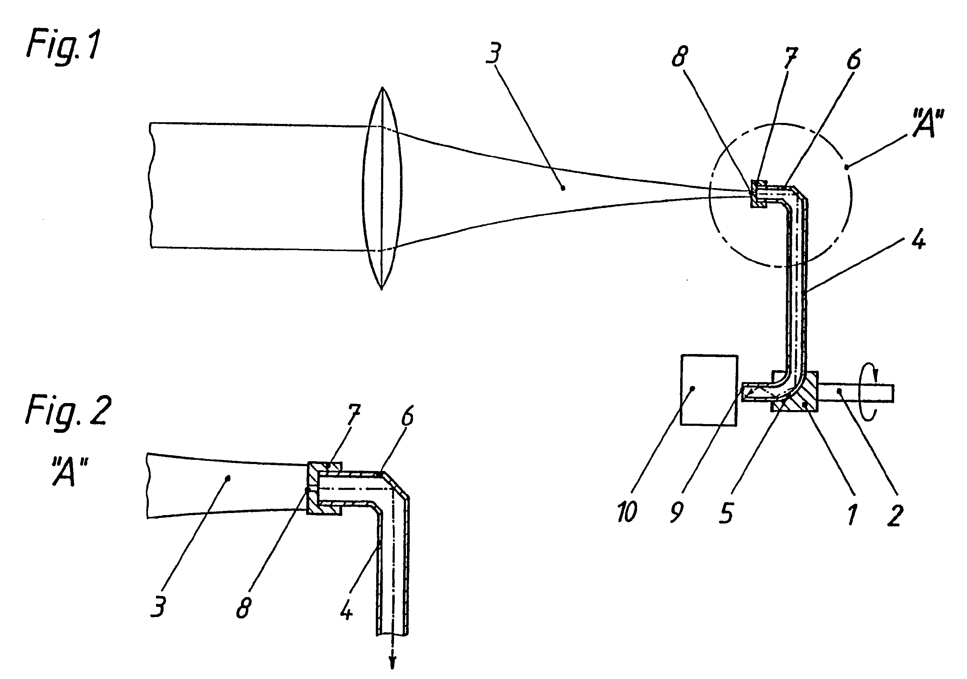

In Fig. 1 ist mit 1 ein drehbar gelagerter Träger bezeichnet, dessen Drehachse 2 parallel zur Achse des Laserstrahls 3 ausgerichtet ist. Mit dem Träger 1 ist ein als Wellenleiter dienender Hohlleiter in Form eines Röhrchens 4 verbunden, das an beiden Enden um 90° umgebogen ist. Dieses Umbiegen kann, wie an dem trägerseitigen Ende 5 des Röhrchens 4 dargestellt, in einem Schritt erfolgt sein. Das andere Ende 6 des Röhrchens 4 zeigt demgegenüber ein Beispiel für eine in mehrere Schritte aufgeteilte Biegung; letztere hat den Vorteil, daß die Reflexionsverluste geringer sind.

Das durch den Laserstrahl 3 führende Ende 6 des Röhrchens 4 ist mit einer Abdeckkappe 7 verschlossen, die in ihrer Mitte eine Bohrung 8 aufweist, die zur Drehachse 2 parallel ist. Der Durchmesser der Bohrung richtet sich nach dem Strahlquerschnitt und dem Innendurchmesser des Röhrchens 4. Bei Benutzung eines $CO_2$-Lasers beträgt der Bohrungsdurchmesser bei Verwendung der Einrichtung für einen freilaufenden Laserstrahl vorzugsweise 0,5 bis 1,0 mm, für einen fokussierten Laserstrahl vorzugsweise 10 bis 50 μm.

Das andere Ende 5 des Röhrchens 4 weist eine Austrittsöffnung 9 auf, die konzentrisch zur Drehachse 2 ist. Vor der Austrittsöffnung 9 ist ein handelsüblicher Detektor 10, beispielsweise bei Verwendung in Verbindung mit einem $CO_2$-Laser ein pyroelektrischer Detektor, feststehend angeordnet.

Bei eingeschaltetem Laser und rotierendem Träger 1 wird das Röhrchen 4 bei jeder Umdrehung des Trägers 1 einmal durch den Laserstrahl 3 hindurchgeführt. Der Bruchteil der Laserstrahlung, der dabei durch die Bohrung 8 in das Innere des Röhrchens 4 gelangt, wird dort bis zur Austrittsöffnung 9 geführt und von dort aus auf dem feststehenden Detektor 10 abgebildet.

Fig. 2, die einen vergrößerten Ausschnitt "A" der Fig. 1 zeigt, läßt den Verlauf der Strahlung im Röhrchen 4 in der Umgebung der Bohrung 8 erkennen. Um die Dämpfung möglichst gering zu halten, sollte die Innenwand des Röhrchens 4 aus einem für die Laser-Wellenlänge hochreflektierenden Material, wie z.B. Kupfer, Silber oder Gold, bestehen bzw. einen entsprechenden Überzug aufweisen, wobei die Oberfläche erforderlichenfalls poliert sein kann.

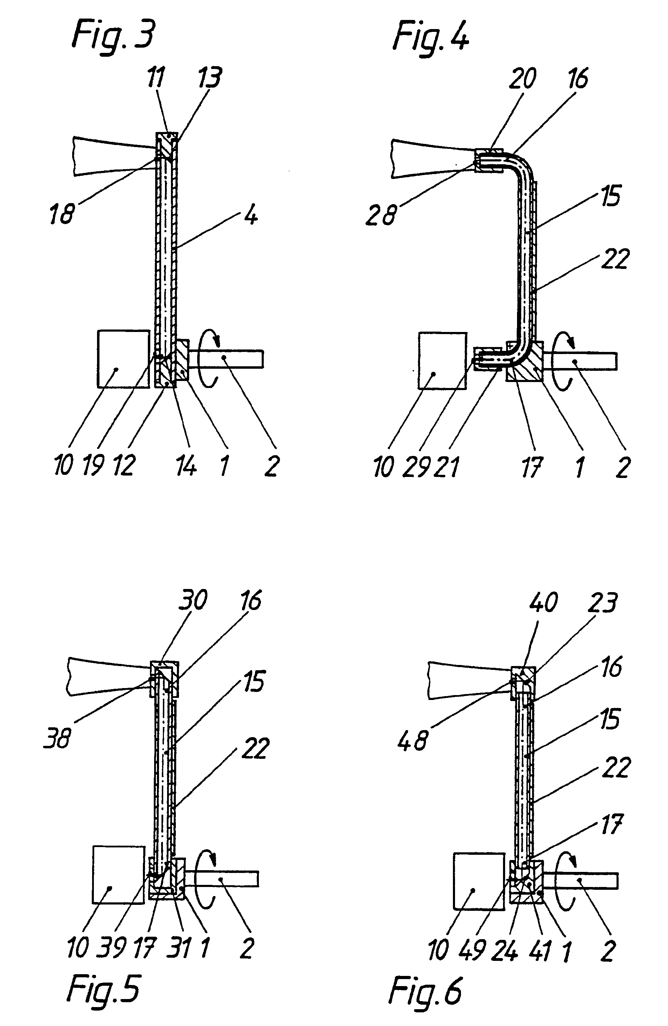

In Fig. 3 ist ein Ausführungsbeispiel dargestellt, bei dem das Röhrchen 4 an seinen Enden nicht umgebogen, sondern mit Stopfen 11 bzw. 12 verschlossen ist, deren Innenseiten 13 bzw. 14 unter einem Winkel von 45° gegenüber der Drehachse 2 abgeschrägt sind. In Höhe der Innenseite 14 ist das Röhrchen 4 mit einer Bohrung 19 versehen, die der Austrittsöffnung 9 in Fig. 1 entspricht.

Fig. 4 zeigt ein Ausführungsbeispiel, bei dem als Wellenleiter ein Lichtleiter 15 dient, der aus einer oder mehreren Glasfaser(n) gebildet ist und an seinen Enden 16 und 17 Schutzkappen 20 bzw. 21 aufweist. Der Lichtleiter 15 ist an beiden Enden 16 und 17 um 90° umgebogen, ähnlich wie das Röhrchen 4 in Fig. 1. Die Schutzkappe 20 weist eine konzentrische Bohrung 28 (entsprechend der Bohrung 8 in Fig. 1) und die Schutzkappe 21 eine konzentrische Bohrung 29 (entsprechend der Austrittsöffnung 9 in Fig. 1) auf.

In Fig. 5 ist der Lichtleiter 15 gerade ausgebildet und an beiden Enden 16 und 17 unter einem Winkel von 45° zur Leiterachse angeschliffen, so daß an der Schliffebene eine Totalreflektion des einfallenden Strahls erfolgt. Die Schutzkappe 30 weist in der dem Laser gegenüberliegenden Wand eine Bohrung 38 (entsprechend der Bohrung 8 in Fig. 1) und die Schutzkappe 31 in der dem Detektor 10 gegenüberliegenden Wand eine Bohrung 39 (entsprechend der Austrittsöffnung 9 in Fig. 1) auf.

Fig. 6 zeigt ein Ausführungsbeispiel, bei dem der Lichtleiter 15 ebenfalls gerade ausgebildet, aber an beiden Enden 16 und 17 unter einem Winkel von 90° zur Leiterachse angeschliffen ist und die Böden 23 und 24 der Schutzkappen 40 bzw. 41 auf der Innenseite um 45° abgeschrägt sind. Die Bohrung 48 in der Schutzkappe 40 und die Bohrung 49 in der Schutzkappe 41 entsprechen den Bohrungen 38 bzw. 39 in Fig. 5. Das Innere der Schutzkappen 40 und 41 ist hochreflektierend ausgebildet.

Um ein Verbiegen des Lichtleiters 15 zu vermeiden, ist bei den Ausführungsformen gemäß Fig. 4, 5 und 6 eine Stütze 22 vorgesehen, an welcher der Lichtleiter 15 befestigt ist, beispielsweise durch Klebung. Die Außenwand der den Laserstrahl kreuzenden Schutzkappe 20 bzw. 30 bzw. 40 ist hochreflektierend ausgebildet, um die Erwärmung möglichst gering zu halten.

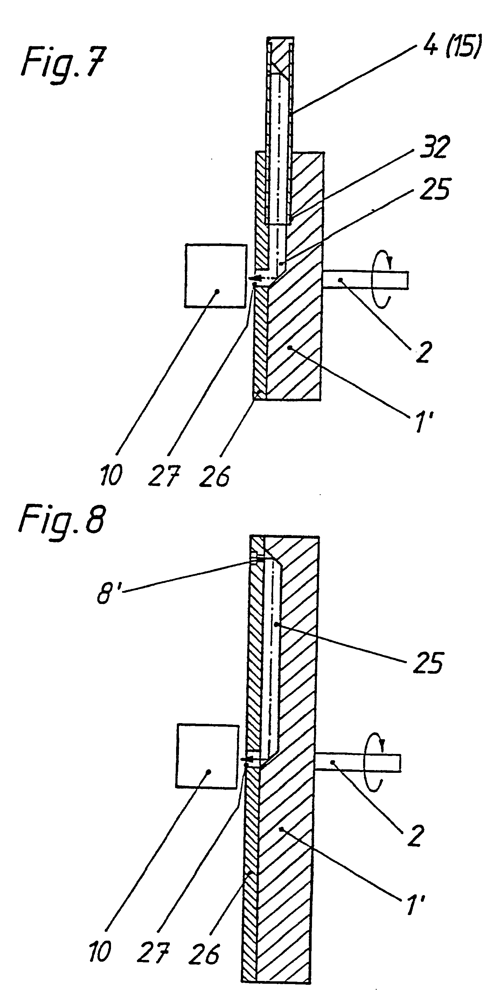

In Fig. 7 ist eine andere Ausgestaltung des Gegenstandes der Erfindung dargestellt, bei der in den Träger ein radial angeordneter Hohlleiter eingearbeitet ist, der durch einen einsteckbaren Wellenleiter verlängert werden kann. Zu diesem Zweck weist der Träger 1' einen Kanal 25 auf, der nach seiner Herstellung durch eine Platte 26 abgedeckt ist, so daß der Kanal 25 den Charakter eines Hohlleiters annimmt. Das Innere Ende des Kanals 25 ist derart abgewinkelt, daß die Austrittsöffnung 27 des Kanals 25 in der Platte 26 konzentrisch zur Drehachse 2 des Trägers 1' ist. Dabei ist es für eine möglichst verlustfreie Strahlführung vorteilhaft, die Abwinkelung des Kanals 25 in mehrere Abschnitte, vorzugsweise in zwei Abwinkelungen von jeweils 45°, zu unterteilen.

Das nach außen weisende Ende des Kanals 25 weist eine Erweiterung 32 auf, in der ein Hohlleiter angeordnet ist, und zwar in Form eines Röhrchens 4, wie es in Fig. 3 dargestellt ist, jedoch ohne den inneren Stopfen 12 und ohne die Bohrung 19. Anstelle des Hohlleiters kann auch ein Lichtleiter 15 in der Erweiterung 32 des Kanals 25 angeordnet sein, wie er in Fig. 4, 5 oder 6 dargestellt ist, jedoch mit einem Austritt des Strahles in Richtung des Kanals 25.

Es liegt ebenfalls im Bereich der Erfindung, den in den Träger 1' eingearbeiteten Hohlleiter 25 nicht durch einen einsteckbaren Wellenleiter 32 zu verlängern, sondern stattdessen dem Träger 1' einen entsprechend größeren.

Durchmesser zu geben und das dem Trägerumfang zugewandte Ende des Hohlleiters 25 auch um 90° abzuwinkeln, so daß seine Eintrittsöffnung dem Laser gegenüberliegt, wie dies in Fig. 8 dargestellt ist. Die Platte 26 weist an dieser Stelle eine Bohrung 8' auf, die der Bohrung 8 in Fig. 1 entspricht. Diese Ausführungsform ist jedoch nur eingeschränkt verwendbar, da der Laserstrahl durch den Träger 1' ganz oder zum größten Teil abgedeckt wird.

Bei den anhand der Fig. 1 bis 8 beschriebenen Ausführungsbeispielen der Erfindung wird bei einer Umdrehung des Trägers 1 bzw. 1' ein Schnitt durch den Laserstrahl aufgenommen. Zur Detektion des gesamten Strahlprofils mit Hilfe einer Vielzahl von an verschiedenen Orten vorgenommenen Schnitten durch den Laserstrahl kann die Drehachse 2 des Trägers 1 bzw. 1' mittels eines nicht dargestellten Schrittmotors parallel verschoben werden. Dabei entstehen die einzelnen Schnitte nacheinander.

Gemäß einer Weiterbildung der Erfindung werden in dem Träger in einer Ebene und mit jeweils gleichem Winkelabstand mehrere Kanäle und in diese eingeführte Wellenleiter angeordnet, wobei die Längen der aus dem Träger herausragenden Teile der Wellenleiter und damit die Abstände ihrer Bohrungen von der Drehachse über den Umfang des Trägers gleichmäßig abnehmen. Auf diese Weise ist es möglich, mit einer einzigen Umdrehung mehrere Schnitte durch den Laserstrahl zu detektieren. Dabei ist es besonders vorteilhaft, daß auch hierbei nur ein Detektor benötigt wird.

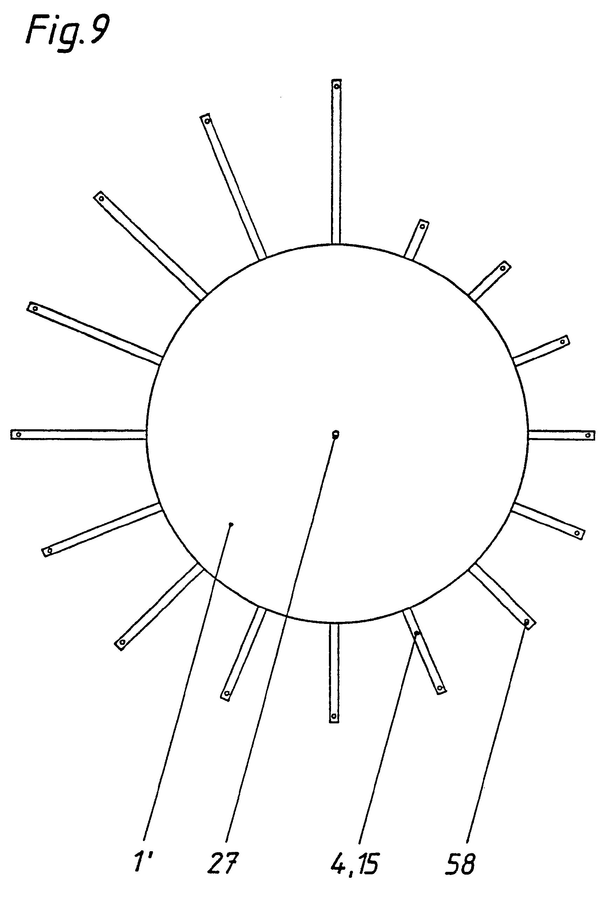

Fig. 9 zeigt einen Träger 1' mit 16 Wellenleitern (Röhrchen 4 oder Lichtleiter 15), die jeweils einen Winkelabstand von 22,5° haben. Die Längen der aus dem Träger 1' herausragenden Teile der Wellenleiter nehmen über den Umfang des Trägers 1' gleichmäßig ab; nach einem Umlauf springt die Länge des kürzesten Wellenleiters auf diejenige des längsten Wellenleiters. Entsprechend verhält sich der Abstand ihrer Bohrungen 58 (= 8, 18, 28, 38 bzw. 48) von der Drehachse des Trägers 1', wobei der Abstandsunterschied der Bohrungen von der Drehachse vom Strahl- bzw. Fokusdurchmesser abhängig ist. Die von den einzelnen Bohrungen 58 ausgeblendeten Teile der Laserstrahlung werden der Austrittsöffnung 27 zugeführt und von dort aus auf dem feststehenden Detektor 10 als parallele Schnitte abgebildet, und zwar auch dann, wenn das Strahlzentrum von seiner Soll-Lage abgewichen ist. Die Abbildung des Strahlprofils auf dem Detektor ist dann entsprechend verschoben, wobei das Maß der Verschiebung zu einer automatischen Korrektur der Strahllage verwendet werden kann.

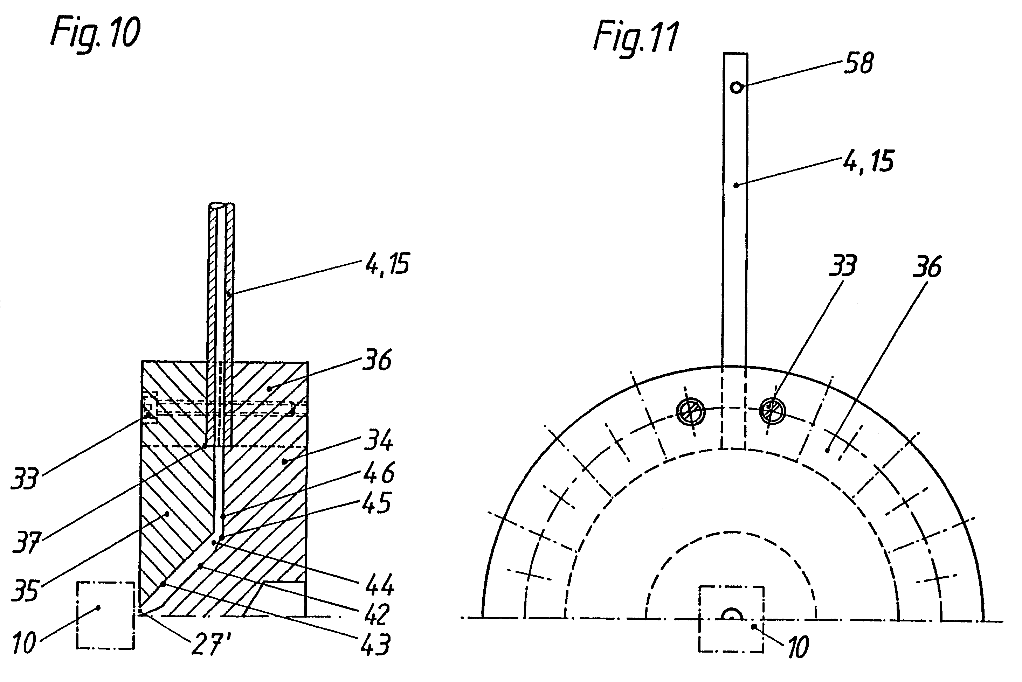

Da es Schwierigkeiten bereiten kann, mehrere Kanäle 25 an der Austrittsöffnung 27 zusammmenzuführen, wird gemäß einer weiteren Ausgestaltung der Erfindung der Träger - wie in Fig. 10 und 11 dargestellt - aus zwei vorzugsweise durch Schrauben 33 miteinander verbundenen Scheiben 34 und 35 gebildet, die nur in einer Randzone 36 aufeinanderliegen und die in dieser Randzone Ausnehmungen 37 zur Aufnahme der Röhrchen 4 bzw. der Lichtleiter 15 sowie in ihrem inneren Teil eine konusförmige Erhöhung 42 bzw. eine ihr angepaßte Vertiefung 43 aufweisen, wobei die Vertiefung 43 in eine dem Detektor 10 zugewandte Austrittsöffnung 27' übergeht und der ringförmige Spalt 44 zwischen den Scheiben 34 und 35 als Kanal dient. Da die Geschwindigkeit der Strahlung erheblich größer ist als die Bewegungsgeschwindigkeit der Bohrungen 58 der Wellenleiter, behindern sich im Spalt 44 die einzelnen durch die Strahlung gelegten Schnitte nicht gegenseitig. Der Durchmesser der Austrittsöffnung 27' beträgt bei Verwendung der Einrichtung in Verbindung mit einem $CO_2$-Laser etwa 1 bis 2 mm.

Diese Ausführungsform der Erfindung hat nicht nur den Vorteil, daß sie einfacher herstellbar ist als eine Vielzahl zusammenlaufender Kanäle; vielmehr ermöglicht sie außerdem ein leichtes Auswechseln der Wellenleiter, beispielsweise gegen solche mit einem anderen Bohrungsdurchmesser oder einer anderen Länge. Hierzu ist es lediglich erforderlich, die benachbarten Schrauben etwas zu lockern und nach dem Austausch des betreffenden Röhrchens bzw. Lichtleiters wieder anzuziehen.

In weiterer Ausgestaltung der vorstehend anhand der Fig. 10 und 11 beschriebenen Ausführungsform der Erfindung ist der Übergang 45 von der Ebene 46 der Scheibe 34 zur konusförmigen Erhöhung 42 abgeschrägt. Dadurch wird die Reflektion der Strahlung in die richtige Bahn gelenkt.

Gewerbliche Verwertbarkeit

Mit dem Erfindungsgegenstand wird bei einer Umdrehung des Trägers ein Schnitt durch den Laserstrahl aufgenommen. Zur Detektion des gesamten Strahlprofils mit Hilfe einer Vielzahl von an verschiedenen Orten vorgenommenen Schnitten durch den Laserstrahl wird die Drehachse des Trägers mittels eines Schrittmotors parallel verschoben. Dies kann zur Überwachung z.B. bei $CO_2$-Laser oder jedem anderen geeigneten Laser vorgenommen werden, die zur Bearbeitung von Werkstücken, von Materialoberflächen, zum Schweißen usw. die nen

| 1 | Träger (1' Träger in Fig. 8) |
|---|---|
| 2 | Drehachse von 1 |
| 3 | Laserstrahl |
| 4 | Röhrchen |
| 5 | Trägerseitiges Ende von 4 |
| 6 | Anderes Ende von 4 |
| 7 | Abdeckkappe |
| 8 | Bohrung |
| 9 | Austrittsöffnung |
| 10 | Detektor |
| 11 | Stopfen oben |
| 12 | Stopfen unten |
| 13 | Innenseite von 11 |
| 14 | Innenseite von 13 |

15 Lichtleiter
16 Oberes Ende von 15
17 Unteres Ende von 15
18 Bohrung
19 Bohrung (Austrittsöffnung)
20 Schutzkappe von 15 oben
21 Schutzkappe von 15 unten
22 Stütze für 15
23 Boden von 20
24 Boden von 21
25 Kanal
26 Platte
27 Austrittsöffnung
28 Bohrung
29 Bohrung (Austrittsöffnung)
30 Schutzkappe von 15 oben
31 Schutzkappe von 15 unten
32 Erweiterung von 25
33 Schrauben
34 Scheibe
35 Scheibe
36 Randzone
37 Ausnehmungen
38 Bohrung
39 Bohrung (Austrittsöffnung)
40 Schutzkappe von 15 oben
41 Schutzkappe von 15 unten
42 Erhöhung
43 Vertiefung
44 Spalt
45 Übergang
46 Ebene
48 Bohrung
49 Bohrung (Austrittsöffnung)
58 Bohrung

## Ansprüche

1. Einrichtung zum Erfassen der radialen Intensitätsverteilung einer Laserstrahlung unter selektivem Ausblenden eines Teilstrahls aus dem Gesamtstrahl, **gekennzeichnet durch** einen drehbar gelagerten Träger (1) mit einer zur Achse des Laserstrahls parallelen Drehachse (2) und durch einen an bzw. in dem Träger (1) in radialer Erstreckung angeordneten Wellenleiter (4, 15), dessen äußeres Ende während einer Umdrehung des Trägers (1) den Laserstrahl (3) kreuzt und dabei jeweils einen Teilstrahl der Laserstrahlung erfaßt und diesen Teilstrahl einem in der Drehachse (2) fest angeordneten, an sich bekannten Detektor (10) zuführt.

2. Einrichtung nach Anspruch 1, **dadurch gekennzeichnet, daß** als Wellenleiter ein Hohlleiter, vorzugsweise in Form eines Röhrchens (4) mit hochreflektierenden Wänden, dient.

3. Einrichtung nach Anspruch 2, **dadurch gekennzeichnet, daß** der Hohlleiter an beiden Enden in einem oder mehreren Schritt(en) insgesamt um jeweils 90° umgebogen ist.

4. Einrichtung nach Anspruch 2, **dadurch gekennzeichnet, daß** das Röhrchen (4) gerade ausgebildet und an mindestens einem Ende unter einem Winkel von 45° abgeschlossen ist und in Höhe dieses Abschlusses in seiner dem Laser gegenüberliegenden Wand eine zur Drehachse (2) parallele Bohrung (18) und - bei beidseitigem Abschluß - in der dem Detector (10) gegenüberliegenden Wand eine zur Drehachse (2) konzentrische Bohrung (19) aufweist.

5. Einrichtung nach Anspruch 1, **dadurch gekennzeichnet, daß** als Wellenleiter ein aus einer oder mehreren Glasfaser(n) gebildeter und an beiden Enden (16, 17) mit einer Schutzkappe versehener Lichtleiter (15) dient und daß die Außenwand der den Laserstrahl kreuzenden Schutzkappe (20, 30, 40) hochreflektierend ausgebildet ist.

6. Einrichtung nach Anspruch 5, **dadurch gekennzeichnet, daß** der Lichtleiter (15) an beiden Enden (16, 17) um jeweils 90° umgebogen ist und seine Schutzkappen (20, 21) jeweils eine konzentrische Bohrung (28, 29) aufweisen.

7. Einrichtung nach Anspruch 5, **dadurch gekennzeichnet, daß** der Lichtleiter (15) gerade ausgebildet und an mindestens einem Ende (16) unter einem Winkel von 45° zur Leiterachse angeschliffen ist und daß jeweils die Schutzkappe (30) im Bereich der Schliffstelle in der dem Laser gegenüberliegenden Wand eine zur Drehachse (2) parallele Bohrung (38) und - bei beidseitig angeschliffenem Lichtleiter (15) - die andere Schutzkappe (31) in der dem Detektor (10) gegenüberliegenden Wand eine zur Drehachse (2) konzentrische Bohrung (39) aufweist.

8. Einrichtung nach Anspruch 5, **dadurch gekennzeichnet, daß** der Lichtleiter (15) gerade ausgebildet ist und mindestens ein Ende des Lichtleiters (15) unter einem Winkel von 90° zur Leiterachse angeschliffen ist und daß der Boden (23, 24) der zugehörigen Schutzkappe(n) (40, 41) auf der Innenseite um 45° abgeschrägt und das Innere dieser Schutzkappe(n) (40, 41) hochreflektierend ausgebildet ist.

9. Einrichtung nach Anspruch 4, 7 oder 8, **dadurch gekennzeichnet, daß** der Träger (1') einen radial angeordneten, als Hohlleiter ausgebildeten Kanal (25) aufweist, daß das Röhrchen (4) an seinem nicht abgeschlossenen Ende bzw. der Lichtleiter (15) an seinem detektorseitigen, unter 90° angeschliffenen Ende mit einem Teil seiner Länge in einer entsprechenden Erweiterung (32) des dem Umfang des Trägers (1') zugewandten Endes des Kanals (25) angeordnet ist und daß das andere Ende des Kanals (25) mehrmals, vorzugsweise zweimal um jeweils 45°, abgewinkelt ist, so daß seine Austrittsöffnung (27) konzentrisch zur Drehachse (2) des Trägers (1') ist.

10. Einrichtung nach einem der Ansprüche 1 bis 9, dadurch gekennzeichnet, daß die Drehachse (2) des Trägers (1) mittels eines Schrittmotors parallel verschiebbar ist.

11. Einrichtung nach Anspruch 9, dadurch gekennzeichnet, daß in dem Träger (1') in einer Ebene und mit jeweils gleichem Winkelabstand mehrere Kanäle und in diese eingeführte Wellenleiter (Röhrchen 4 bzw. Lichtleiter 15) angeordnet sind und daß die Längen der aus dem Träger (1') herausragenden Teile der Wellenleiter und damit die Abstände der Bohrungen (58) der Wellenleiter von der Drehachse (2) über den Umfang des Trägers (1') gleichmäßig abnehmen.

12. Einrichtung nach Anspruch 11, dadurch gekennzeichnet, daß der Träger aus zwei vorzugsweise durch Schrauben (33) miteinander verbundenen Scheiben (34, 35) gebildet ist, die nur in einer Randzone (36) aufeinanderliegen, die in dieser Randzone (36) Ausnehmungen (37) zur Aufnahme der Röhrchen (4) bzw. der Lichtleiter (15) aufweisen, und von denen die eine in ihrem inneren Teil eine konusförmige Erhöhung (42) und die andere eine dieser Erhöhung angepaßte Vertiefung (43) aufweist, wobei die Vertiefung (43) in eine dem Detektor (10) zugewandte Austrittsöffnung (27') übergeht und der ringförmige Spalt (44) zwischen den Scheiben (34, 35) als Kanal dient.

13. Einrichtung nach Anspruch 12, dadurch gekennzeichnet, daß der Übergang (45) von der Scheibenebene (46) zur konusförmigen Erhöhung (48) abgeschrägt ist.

14. Einrichtung nach einem der vorhergehenden Ansprüche, dadurch gekennzeichnet, daß bei Benutzung eines $CO_2$ -Lasers der Durchmesser der Bohrung (8, 18) im Röhrchen (4) bzw. in der Schutzkappe (28, 38, 48) bei Verwendung für einen freilaufenden Laserstrahl 0,5 bis 1,0 mm, bei Verwendung für einen fokussierten Laserstrahl 10 bis 50 µm beträgt.

## Claims

1. Device for determining the radial intensity distribution of a laser radiation, accompanied by the selective fading out of a partial beam from the total beam, characterized by a support (1), mounted in rotary manner and having a rotating shaft (2) parallel to the laser beam and by a waveguide (4, 5) arranged in or on the support (1) in the radial extension and whose outer end intersects the laser beam (3) during the rotation of the support (1) and in each case determines a partial beam of the laser radiation and supplies said partial beam to a per se known detector (10) fixed in the rotating shaft (2).

2. Device according to claim 1, characterized in that the waveguide is constituted by a hollow waveguide, preferably in the form of a tube, (4) with highly reflecting walls.

3. Device according to claim 2, characterized in that the hollow waveguide is bent over in one or more steps at its two ends in all by in each case 90°.

4. Device according to claim 2, characterized in that the tube (4) is straight and is terminated at at least one end under an angle of 45° and level with this termination has, in a wall facing the laser, a bore (18) parallel to the rotating shaft (2) and, in the case of a two-sided termination, in the wall facing the detector (10) a bore (19) concentric to the rotating shaft (2).

5. Device according to claim 1, characterized in that the waveguide in the form of a light guide (15) formed from one or more glass fibres and provided at both ends (16, 17) with a protective cap and that the outer wall of the protective cap (20, 30, 40) intersecting the laser beam is constructed in highly reflecting manner.

6. Device according to claim 5, characterized in that the light guide (15) is bent over in each case by 90° at both ends (16, 17) and each of its protective caps (20, 21) has a concentric bore (28, 29).

7. Device according to claim 5, characterized in that the light guide (15) is straight and is ground at least one end (16) under an angle of 45° to the guide axis and that in the vicinity of the ground point in the wall facing the laser, the protective cap (30) has a bore (38) parallel to the rotating shaft (2) and, when both sides of the light guide (15) are ground, the other protective cap (31) has a bore (39) concentric to the rotating shaft (2) in the wall facing the detector (10).

8. Device according to claim 5, characterized in that at least one end of the light guide (15) is ground at an angle of 90° and that the bottom (23, 24) of the associated protective cap or caps (40, 41) is bevelled on the inside by 45° and that the interior of said protective cap or caps (40, 41) is made highly reflecting.

9. Device according to claims 4, 7 or 8, characterized in that the support (1') has a radially positioned duct (25) constructed as a hollow waveguide, that the tube (4) on its non-terminated end or the lightguide (15) at its detector-side end ground under 90° is arranged with part of its length in a corresponding enlargement (32) of the end of duct (25) facing the circumference of the support (1') and that the other end of the duct (25) is angled several times, preferably twice by in each case 45°, so that its exit port (27) is concentric to the rotating shaft (2) of the support (1').

10. Device according to one of the claims 1 to 9, characterized in that the rotating shaft (2) of the support (1) is displaceable in parallel by means of a stepping motor.

11. Device according to claim 9, characterized in that in one plane and with in each case the same angular distance, the support (1') contains several ducts and waveguides inserted into the same (tubes 4 or lightguides 15) and that the length of the waveguide parts projecting out of the support (1') and

therefore the spacings of the bores (58) of the waveguide uniformly decrease from the rotating shaft (2) over the circumference of the support (1').

12. Device according to claim 11, characterized in that the support is formed from two disks (34, 35) preferably interconnected by screws (33) and which only rest on one another in a marginal zone (36) and have in the latter recesses (37) for receiving the tube (4) or the light guide (15), the depression (43) passing into an exit port (27') facing the detector (10) and the annular gap (44) between the disks (34, 35) serves as a duct.

13. Device according to claim 12, characterized in that the transition (45) from the disk plane (46) to the conical raised portion (48) is bevelled.

14. Device according to one of the preceding claims, characterized in that when using a $CO_2$ laser, the diameter of the bore (8, 18) in the tube (4) or in the protective cap (28, 38, 48) is 0.5 to 1.0 mm when used for a free-running laser beam and 10 to 50 μm when used for a focus laser beam.

## Revendications

1. Dispositif à détecter la répartition radiale des intensités d'un rayonnement du laser, à suppression sélective d'un faisceau partiel du faisceau total, **caractérisé par** un support (1) pivotant dont l'axe de révolution (2) est parallèle à l'axe du rayon laser, ainsi que par un guide d'ondes (4, 15) disposé, à orientation radiale, à ou dans ledit support (1), dont l'extrémité extérieure croise ledit rayon laser (3) au cours de la révolution dudit support (1), en détectant respectivement un faisceau partiel du rayonnement du laser et en alimentant ce faisceau partiel à un détecteur (10) connu en soi et disposés à poste fixe dans ledit axe de révolution (2).

2. Dispositif selon la Revendication 1, **caractérisé** en ce qu'en tant que guide d'ondes un élément est pourvu, de préférence sous forme d'un petit tube (4) aux parois fortement réfléchissantes.

3. Dispositif selon la Revendication 2, **caractérisé** en ce que par une ou plusieurs opération(s), ledit guide d'ondes est replié par 90° en total à chacune de ses deux extrémités.

4. Dispositif selon la Revendication 2, **caractérisé** en ce que ledit petit tube (4) présente une configuration rectiligne et est fermé, au moins à une de ses extrémités, à un angle de 45°, et en ce qu'il présente, à sa paroi opposée au laser au niveau de ladite charge, un alésage (18) parallèle audit axe de révolution (2), ainsi qu'en cas d'une charge de ses deux côtés, un alésage (19) concentrique relativement à l'axe de révolution (2), dans la paroi opposée audit détecteur (10).

5. Dispositif selon la Revendication 1, **caractérisé** en ce qu'en tant que guide d'ondes un guide de lumière (15) est pourvu qui est constitué par un ou plusieurs fibre(s) optique(s) et est pourvu, à ses deux extrémités (16, 17), par un capot protecteur, et en ce que la paroi externe dudit capot protecteur (20, 30, 40) croisant ledit rayon laser présente une formation fortement réfléchissante.

6. Dispositif selon la Revendication 5, **caractérisé** en ce que ledit guide de lumière (15) est replié par 90° à chacune de ses deux extrémités (16, 17), et que chacun de ses capots protecteurs (20, 21) présente un alésage concentrique (28, 29).

7. Dispositif selon la Revendication 5, **caractérisé** en ce que ledit guide de lumière (15) présente une configuration rectiligne et est mis en tranchant à un angle de 45° relativement à l'axe du guide à au moins une (16) de ses extrémités, et en ce que le capot protecteur (30) présente un alésage (38) parallèle à l'axe de révolution (2) dans la zone tranchée dans la paroi opposée au laser, ainsi qu'en cas d'un guide d'ondes (15) mis en tranchant à ses deux extrémités, l'autre capot protecteur (31) dans la paroi opposée au détecteur (10) présente un alésage (39) concentrique relativement à l'axe de révolution (2).

8. Dispositif selon la Revendication 5, **caractérisé** en ce qu'au moins une des extrémités dudit guide de lumière (15) est mise en tranchant à un angle de 90°, et en ce que le fond (23, 24) dudit capot protecteur ou desdits capots protecteurs (40, 41) est biseauté à 45° à la face interne pendant que l'intérieur dudit capot protecteur ou desdits capots protecteurs (40, 41) présente une formation fortement réfléchissante.

9. Dispositif selon les Revendications 4, 7 ou 8, **caractérisé** en ce que ledit support (1') comprend un conduit (25) sous forme d'un guide d'ondes disposés radialement, que ledit petit tube (4), à son extrémité non-fermée, ou ledit guide de lumière (15) à son extrémité côté détecteur, mise en tranchant à 90, respectivement est disposé, par une partie de sa longueur, dans un évasement (32) approprié de l'extrémité dudit conduit (25) qui est adjacente à la périphérie dudit support (1'), et en ce que l'autre extrémité dudit conduit (25) est pliée plusieurs fois, de préférence deux fois par 45° respectivement, d'une façon qu'un orifice de sortie (27) soit concentrique relativement à l'axe de révolution (2) dudit support (1').

10. Dispositif selon quelconque des Revendications 1 à 9, **caractérisé** en ce que ledit axe de révolution (2) dudit support (1) est susceptible d'un déplacement parallèle au moyen d'un moteur pas à pas.

11. Dispositif selon la Revendication 9, **caractérisé** en ce que plusieurs conduits et plusieurs guides d'ondes (petits tubes 4 ou guides de lumière 15) y introduits sont disposés dans ledit support (1') au même plan, à respectivement la même distance angulaire, et en ce que les longueurs des portions desdits guides d'ondes qui font saillie dudit support (1') et donc les écarts entre les alésages (58) desdits guides ondes subissent une diminution uniforme de l'axe de révolution (2) sur la périphérique dudit support (1').

12. Dispositif selon la Revendication 11, **caractérisé** en ce que ledit support est constitué par deux plaques (34, 35) reliées l'une à l'autre au moyen de deux vis (33) de préférence, lesdites plaques n'étant superposées que dans une zone marginale (36) et présentant des creux (37) dans cette zone marginale pour y recevoir ledit petit tube (4) ou ledit guide de lumière (15), pendant que le creux (43) passe à un orifice de sortie (27') adjacent audit détecteur (10) et la fente annulaire (44) entre lesdites plaques (34, 35) est pourvue en tant que conduit.

13. Dispositif selon la Revendication 12, **caractérisé** en ce que la transition (45) du plan de disque (46) à une bosse conique (48) est biseautée.

14. Dispositif selon quelconque des Revendications précédentes, **caractérisé** en ce qu'à l'utilisation d'un laser à $CO_2$ le diamètre de l'alésage (8, 18) dans ledit petit tube (4) ou dans ledit capot protecteur (28, 38, 48), respectivement correspond à une valeur de 0,5 à 1,0 mm au cas d'une application pour un rayon laser libre et à une valeur de 10 à 50 µm au cas d'une application pour un rayon laser focalisé.

EP 0 294 367 B1

Fig.1

"A"

Fig.2

"A"

**Fig. 3**

11  13

18

4

10 19 12  14  1  2

**Fig. 4**

20  16

28

15

22

10 29 21  17  1  2

30  16

38

15

22

10 39 17 31  1  2

**Fig.5**

40  23

16

48

15

22

17

10 49 24 41  1  2

**Fig.6**

Fig.7

4 (15)

32

25

2

1'

10  27  26

Fig.8

8'

25

2

1'

10  27  26

Fig.9

1'    27    4,15    58

Fig. 10

4, 15

36

33

34

46

45

37

35

44

42

43

10

27'

Fig. 11

58

4, 15

33

36

10

EP 0 294 367 B1